# EUROPEAN PATENT SPECIFICATION

(11) **EP 0 470 721 B1**
(45) Date of publication and mention of the grant of the patent: **05.04.1995**
(21) Application number: 91306632.0
(22) Date of filing: 22.07.1991
(51) Int. Cl.: F16C 9/04, F02B 75/22, F02F 7/00

(54) **V piston engines**
V-Motor
Moteurs à piston en V

(30) Priority: 07.08.1990 GB 9017261
(43) Date of publication of application: 12.02.1992
(60) Divisional application: 94201979.5
(73) Proprietor: ROVER GROUP LIMITED, Bickenhill Birmingham B37 7HQ (GB); KIA MOTORS CORPORATION, Kurogu, Seoul (KR)
(72) Inventor: Benton, David George, Redditch, Worcestershire B98 8RL (GB)
(74) Representative: Farrow, Robert Michael

(56) References cited:
- DE-B- 1 027 009
- US-A- 2 344 275
- US-A- 3 116 724
- US-A- 4 644 916

## Description

The invention relates to piston engines and to their manufacture. Particularly it relates to V-type engines in a series which includes a V6 type and a V8 type which are well known as motor vehicle power units.

The V8 type of engine commonly has two banks of four cylinders with the banks at 90 degrees to each other. It uses a crankshaft having four crank throws and four crankpins so that the big end bearing of the connecting rod of each cylinder in one bank and the big end bearing of the connecting rod of the opposite cylinder in the other bank are journalled side by side on a common crankpin. The crankpin is of uniform diameter and axis and there is no substantial separation between adjacent side faces of the big end bearings. The cylinders of one bank are offset relative to the crankpin axis from those of the other bank by an amount equivalent to the axial distance between the side faces of one big end bearing, this being called the bank offset.

The V6 type of engine commonly uses a crankshaft having three crank throws and three crankpins. Again, the big end bearing of the connecting rod of each cylinder in one bank and the big end bearing of the connecting rod of the opposite cylinder in the other bank are journalled side by side on a common crankpin. However, if the crankpin is of uniform diameter and axis and there is no substantial separation between adjacent side faces of the big end bearings then the cylinder banks have to be arranged at 60 degrees to each other if engine firing intervals are to be even.

There is relatively little opportunity to exploit common components or use common machining facilities with a 90 degree V8 and a 60 degree V6. A 90 degree V6 can be designed and many are in use. However, to give even firing intervals and acceptable low speed refinement the common crankpin has to have offset axes. To maintain an adequate cross-sectional area along the crankpin and avoid high stress concentrations the journal areas on the common crankpin are separated by an integral collar. In existing designs this collar increases the bank offset so that this usually amounts to the axial thickness of the collar plus the axial distance between the sides of the big end bearing. Thus whilst there can be some use of common components between a 90 degree V8 and a 90 degree V6 there is a different bank offset which makes it difficult to machine and assemble V8 and V6 engines on the same production facility.

It is an object of the invention to provide a series of engines including V8 and V6 types which have an identical bank offset.

According to one aspect of the invention there is provided a series of piston engines, each engine in the series having an engine block comprising two banks of two or more cylinders arranged in V formation, a crankshaft journalled in the engine block and having two or more crankpins, pistons, each guided for reciprocal movement in a respective cylinder bore, and connecting rods, each having a small end bearing at one end connected to a respective piston and a big end bearing at the other end, each engine of the series having the big end bearing of the connecting rod of each cylinder in one bank and the big end bearing of the connecting rod of the opposite cylinder in the other bank journalled side by side on a respective one of the crankpins, the series including one type of engine which has each of the respective crankpins formed with a uniform diameter and axis and which has no substantial separation between adjacent side faces of the respective big end bearings and including another type of engine having a different number of cylinders to the first type of engine and which has each of the respective crankpins formed with offset axes and which has axial separation of adjacent side faces of the respective big end bearings, the axes of the cylinders of one bank in each of said one and said other types of engine being offset, relative to the crankshaft axis, from the axes of the cylinders of the other bank by an amount called the bank offset which is common to both said types of engine, said other type of engine having the axis of each cylinder offset, relative to the crankshaft axis, from the axial centre of the respective big end bearing by an amount called the connecting rod offset and being arranged so that the bank offset is less than the distance between axial centres of the big end bearings on each of the respective crankpins.

Preferably said one type of engine has the axis of each cylinder, relative to the crankshaft axis, offset from the axial centre of the respective big end bearing by an amount also called the connecting rod offset and is arranged so that the bank offset is greater than the distance between axial centres of the big end bearings on each of the respective crankpins. In this case the connecting rods offsets of both said one and said other types of engine in the series may be identical, as may the cylinder bores or the connecting rods themselves.

Connecting rod offsets are not in themselves new (see, for example US-A-2 344 275). In in-line type engines they have been used where the axial spacing of the crankpins has conflicted with the requirement for relatively uniform spacing of the cylinder axes. In V6 type engines they have been used to reduce the bank offset and hence the overall length of the engine.

Where the connecting rod offsets of both said one and said other types of engine in the series are identical as referred to above, an engine of said other type may be characterised in that the magnitude of the connecting rod offset is one quarter of the axial distance separating adjacent side faces of the big end bearings on each of the crankpins.

The invention will now be described by way of example and with reference to the accompanying drawings, of which :
Fig 1 is a simplified cross-section of a V8 type engine of known type;
Fig 2 is a diagram showing the arrangement of crankshaft, pistons and connecting rods of the V8 type engine shown in Fig 1;
Fig 3 is a scrap-section showing one crankpin of the crankshaft of the V8 engine shown in Fig 1, together with the connecting rod and piston of one cylinder and part of the connecting rod of the opposite cylinder in the other bank;
Fig 4 is a scrap-section similar to Fig 3, less the piston and part of the connecting rod and showing the bank offset of the V8 engine shown in Fig 1;
Fig 5 is a scrap-section similar to Fig 4 but showing one crankpin of the crankshaft of a V6 engine of known type;
Fig 6 is a cross-section on the line VI - VI in Fig 5, omitting the connecting rods;
Fig 7 is a scrap-section similar to Fig 4 but showing part of a V8 engine according to the invention; and
Fig 8 is a scrap-section similar to Fig 5 but showing part of a V6 engine according to the invention.

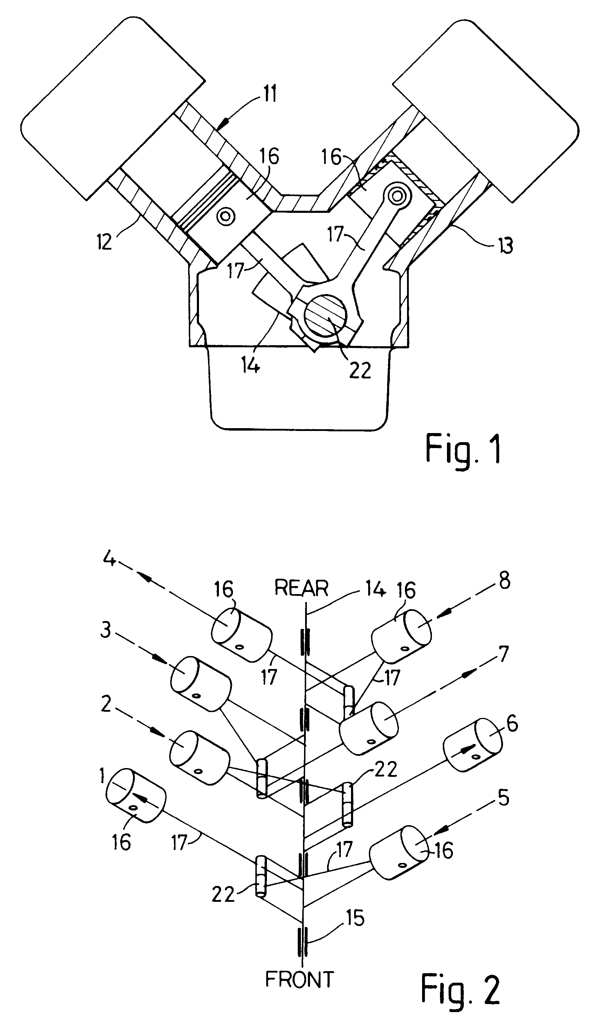

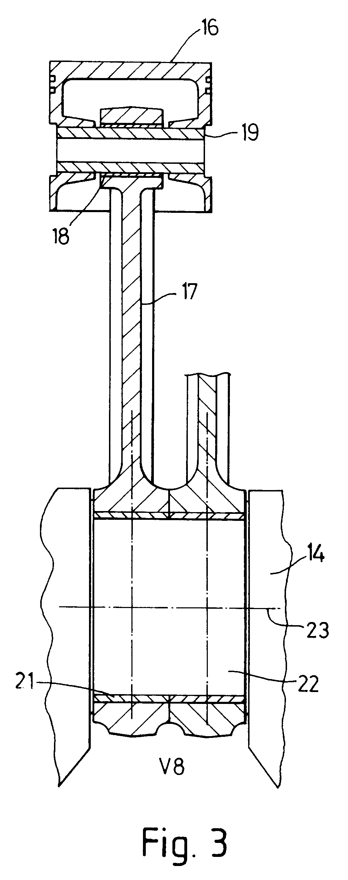

Figs 1 to 6 illustrate known V8 and V6 piston engine technology. Fig 1 shows an engine block 11 having one bank 12 of cylinders and another bank 13 of cylinders arranged in V formation with the banks at 90 degrees to each other. There are four cylinders in each bank of the V8 and three cylinders in each bank in the V6. Fig 2 shows the axes of the cylinders in one bank labelled 1 to 4 and the axes of the cylinders the other bank labelled 5 to 8.

The lower part of the engine block 11, usually referred to as the crankcase, provides journal bearings for a crankshaft 14. The journal bearings are shown diagrammatically in Fig 2 at 15. Pistons 16 are reciprocal in cylinder bores and are connected to the crankshaft by connecting rods 17, each having a small end bearing 18 at one end connected to the piston through a gudgeon pin 19 and a big end bearing 21 at the other end connected to a crankpin 22 which forms part of the crankshaft 14. The big end bearing 21 of the connecting rod 17 of each cylinder in the one bank 12 and the big end bearing of the connecting rod of each cylinder in the other bank 13 are journalled side by side on a respective crankpin 22 so that the crankpin is common to both.

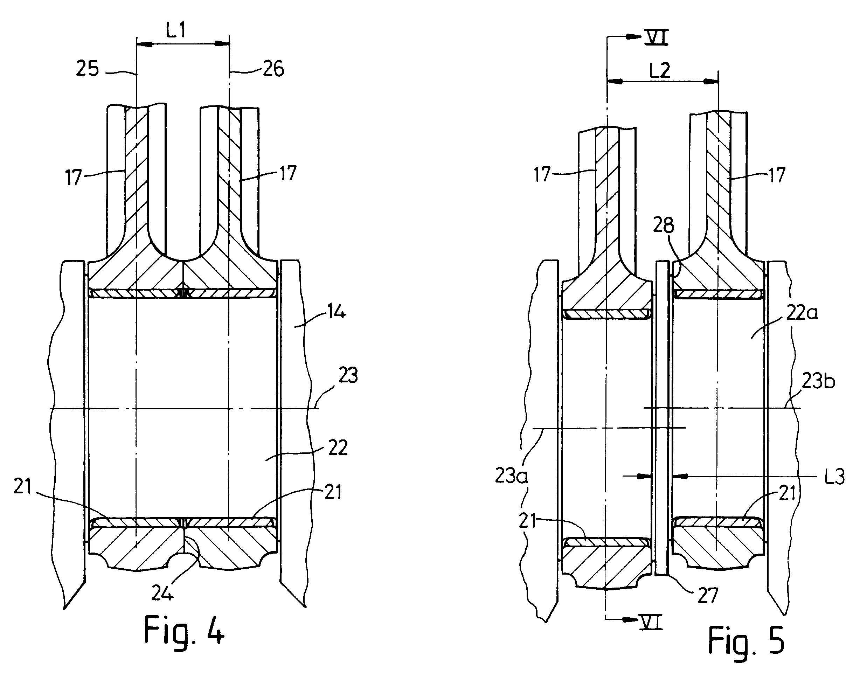

In the known V8 engine the crankpin 22 is formed with a uniform diameter and axis 23 and there is no substantial clearance between adjacent side faces 24 of the big end bearings 21. Each connecting rod 17 and its bearings 18 and 21 are arranged symmetrically central relative to the respective cylinder axis 25 and 26 (Fig 4). The cylinders, as illustrated by axes 25 and 26, are axially offset relative to the axis of crankshaft 14 by an amount L1 which, by virtue of the symmetry of the connecting rods, is equivalent to the axial distance between opposite side faces of one of the big end bearings 21.

The offset L1 is termed the bank offset to denote the amount by which one bank of cylinders is offset from the other.

In the known V6 engine the crankpin 22a has offset axes 23a and 23b. The cylindrical portions of the crankpin 22a defined by axes 23a and 23b are separated by an integral collar or web 27. Annular steps 28 on each side of the collar 27 provide axial location bearing faces for the connecting rods.

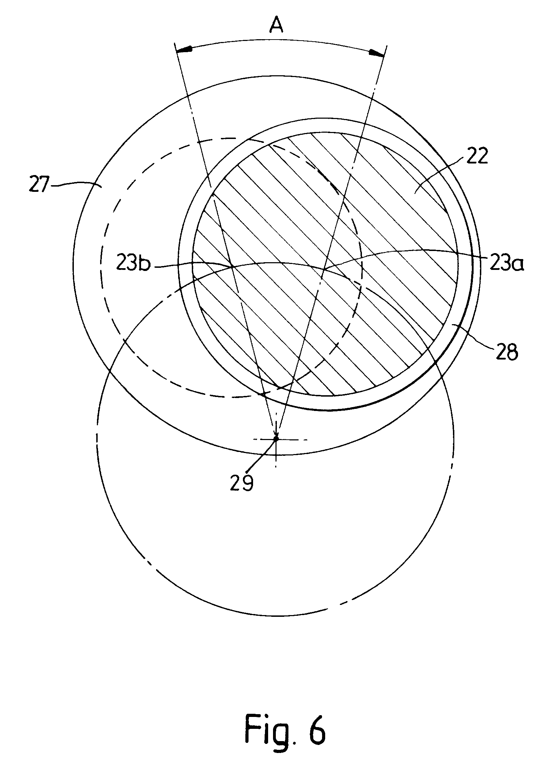

The crankpin axes 23a and 23b are offset by an amount which is equivalent to an angle A (Fig 6) between the crank throws, that is the lines between the crankshaft axis 29 and the crankpin axes 23a and 23b. This crankpin offset is required to give even firing intervals when the V6 engine retains the same 90 degrees between the bank angles as is used on the V8 engine. However, the presence of the collar 27, including the steps 28, means that the connecting rods 17 are spaced apart a distance L2 which is equivalent to L1 plus the axial width of the collar.

Since L2 is also the bank offset the V6 engine cannot be made on the same production facilities as the V8 engine if mass-production methods are to be exploited to the full. For example, it would be normal practice to machine all eight or all six cylinder bores simultaneously using multiple boring heads at fixed centres.

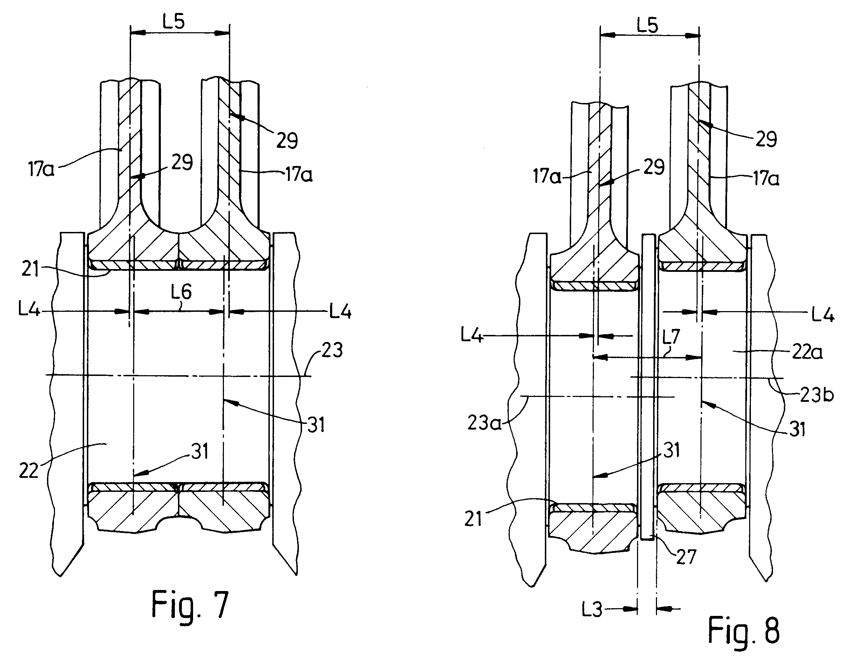

The present invention overcomes the problem by allowing both V6 and V8 types of engines to use a common bank offset. Figs 7 and 8 show how the known V6 and V 8 engines are modified in a preferred embodiment of the invention. Where appropriate the same reference numerals as those used in Figs 1 to 6 are used.

In the preferred embodiment the common bank offset is obtained by having the axis 29 of each cylinder offset by a distance L4 relative to the crankshaft axis from the axial centre 31 of the respective big end bearing 21. This offset L4 is referred to as the connecting rod offset and is achieved here by having the small end bearing 18 of each connecting rod 17a arranged centrally about the axis 29 of the respective cylinder so that its axial centre coincides with the cylinder axis 29 and is offset relative to the axial centre 31 of the big end bearing, this being known as an offset connecting rod.

If the connecting rod offset L4 is one quarter of the axial distance between opposite side faces of the big end bearings on a common crankpin of the V6 type engine, then the same connecting rod offset can be used for both the V6 and V8 type engines. This axial distance is the same as the axial width L3 of the collar 27 (Fig 8). It thus follows that the same connecting rods can be used for a family of engines which includes both the V6 and V8 types.

In the V8 engine (Fig 7) the connecting rod offsets L4 are arranged so that the bank offset L5 is greater than the distance L6 between the axial centres 31 of the big end bearings 21 on each of the crankpins 22 and in the V6 engine (Fig 8) the connecting rod offsets L4 are arranged so that the bank offset L5 is less than the distance L7 between axial centres 31 of the respective big end bearings.

In an alternative series of engines the V8 engine has no connecting rod offset whilst the V6 engine has its connecting rod offset doubled compared to that just described above.

An alternative to the offset connecting rod is a piston with gudgeon pin bosses arranged to give clearance to a small end bearing which is offset relative to the cylinder axis but central relative to the big end bearing. This may be achieved either by having one longer and one shorter boss or by having small and large side clearances between the small end bearing and the bosses.

The provision of the same bank offset greatly simplifies production of engines of V6 and V8 types. As well as the ability to simultaneously machine all cylinder bores as previously mentioned, other machining and assembly operations can be made using the same production facilities. These production facilities would preferably include a transfer line wherein a number of workstations each perform different machining or assembly stage and the blocks are transferred between workstations at a fixed rate.

The invention may be applied to series or families of V type engines with other numbers of cylinders where connecting rods of pairs of cylinders of each bank are journalled side by side on a common crank pin and a common bank offset is to be achieved. It may also be applied to series of engines in which the banks of cylinders are arranged at an angle other than 90 degrees to each other.

## Claims

1. A series of piston engines, each engine in the series having an engine block (11) comprising two banks (12, 13) of two or more cylinders arranged in V formation, a crankshaft (14) journalled in the engine block and having two or more crankpins (22, 22a), pistons (16), each guided for reciprocal movement in a respective cylinder bore, and connecting rods (17a), each having a small end bearing (18) at one end connected to a respective piston and a big end bearing (21) at the other end, each engine of the series having the big end bearing of the connecting rod of each cylinder in one bank (12) and the big end bearing of the connecting rod of the opposite cylinder in the other bank (13) journalled side by side on a respective one of the crankpins, the series including one type of engine which has each of the respective crankpins (22) formed with a uniform diameter and axis (23) and which has no substantial separation between adjacent side faces (24) of the respective big end bearings (21) and including another type of engine having a different number of cylinders to the first type of engine and which has each of the respective crankpins (22a) formed with offset axes (23a, 23b) and which has axial separation of adjacent side faces of the respective big end bearings, the axes (29) of the cylinders of one bank (12) in each of said one and said other types of engine being offset, relative to the crankshaft axis, from the axes of the cylinders of the other bank (13) by the an amount called the bank offset (L5) which is common to both said types of engine, said other type of engine having the axis (29) of each cylinder offset, relative to the crankshaft axis, from the axial centre (31) of the respective big end bearing (21) by an amount called the connecting rod offset (L4) and being arranged so that the bank offset (L5) is less than the distance (L7) between axial centres of the big end bearings on each of the respective crankpins (22a).

2. A series according to Claim 1, characterised in that said one type of engine has the axis (29) of each cylinder, relative to the crankshaft axis, offset from the axial centre (31) of the respective big end bearing (21) by an amount also called the connecting rod offset (L4) and is arranged so that the bank offset (L5) is greater than the distance (L6) between axial centres of the big end bearings on each of the respective crankpins (22).

3. A series according to Claim 2, characterised in that the small end bearing (18) of each connecting rod (17a) is arranged centrally about the axis (29) of the respective cylinder so that its axial centre is offset relative to the axial centre (31) of the respective big end bearing (21).

4. A series according to Claim 2 or Claim 3, characterised in that the connecting rod offsets (L4) of both said one and said other types of engine are identical.

5. A series according to Claim 4, characterised in that the cylinder bores of both said one and said other types of engine are identical.

6. A series according to Claim 4 or Claim 5, characterised in that the connecting rods (17a) of both said one and said other types of engine are identical.

7. A series according to any preceding claim, characterised in that said one type of engine is a V8 and said other type of engine is a V6.

8. A series according to any of Claims 4 to 7 wherein an engine of said other type is characterised in that the magnitude of the connecting rod offset (L4) is one quarter of the axial distance (L3) separating adjacent side faces (24) of the big end bearings (21) on each of the crankpins (22a).

## Patentansprüche

1. Baureihe von Hubkolbenmotoren, wobei jeder Motor der Baureihe einen Motorblock (11) mit zwei Reihen (12,13) von zwei oder mehr V-förmig angeordneten Zylindern, eine Kurbelwelle (14), die im Motorblock gelagert ist und zwei oder mehr Kurbelzapfen (22, 22a) aufweist, Kolben (16), jeweils zur wechselseitigen Bewegung in einer jeweiligen Zylinderbohrung geführt, und Pleuel (17a) umfaßt, die jeweils an einem Ende ein Pleuelaugenlager (18), das mit einem entsprechenden Kolben verbunden ist, und am anderen Ende ein Pleuelhauptlager (21) aufweisen, wobei bei jedem Motor der Baureihe das Pleuelhauptlager des Pleuels jedes Zylinders in einer Reihe (12) und das Pleuelhauptlager des Pleuels des gegenüberliegenden Zylinders in der anderen Reihe (13) nebeneinander auf einem jeweiligen Kurbelzapfen gelagert sind, wobei die Baureihe eine Motorart umfaßt, bei der jeder der entsprechenden Kurbelzapfen (22) mit einem gleichmäßigen Durchmesser und mit einer gleichmäßigen Achse (23) ausgebildet ist und bei der es keinen wesentlichen Abstand zwischen benachbarten Seitenflächen (24) der jeweiligen Pleuelhauptlager (21) gibt, sowie eine andere Motorart, die eine von der ersten Motorart verschiedene Anzahl von Zylindern aufweist und bei der jeder der entsprechenden Kurbelzapfen (22a) mit versetzten Achsen (23a, 23b) ausgebildet ist und benachbarte Seitenflächen der jeweiligen Pleuelhauptlager axial beabstandet sind, wobei die Achsen (29) der Zylinder einer Reihe (12) sowohl bei jener einen als auch bei jener anderen Motorart im Verhältnis zur Kurbelwellenachse zu den Achsen der Zylinder der anderen Reihe (13) um ein als Reihenversatz (L5) bezeichnetes Maß versetzt sind, das den beiden Motorarten gemein ist, wobei die Achse (29) jedes Zylinders bei jener anderen Motorart im Verhältnis zur Kurbelwellenachse zum axialen Mittelpunkt (31) des jeweiligen Pleuelhauptlagers (21) um ein Maß versetzt ist, das als Pleuelversatz (L4) bezeichnet wird, und jene andere Motorart so angeordnet ist, daß der Reihenversatz (L5) geringer ist als der Abstand (L7) zwischen den axialen Mittelpunkten der Pleuelhauptlager an jedem der jeweiligen Kurbelzapfen (22a).

2. Baureihe nach Anspruch 1, dadurch gekennzeichnet, daß die Achse (29) jedes Zylinders bei jener einen Motorart im Verhältnis zur Kurbelwellenachse zum axialen Mittelpunkt (31) des jeweiligen Pleuelhauptlagers (21) um ein Maß versetzt ist, das auch als Pleuelversatz (L4) bezeichnet wird, und jene eine Motorart so angeordnet ist, daß der Reihenversatz (L5) größer ist als der Abstand (L6) zwischen den axialen Mittelpunkten der Pleuelhauptlager an jedem der jeweiligen Kurbelzapfen (22).

3. Baureihe nach Anspruch 2, dadurch gekennzeichnet, daß das Pleuelaugenlager (18) jedes Pleuels (17a) mittig um die Achse (29) des jeweiligen Zylinders angeordnet ist, so daß sein axialer Mittelpunkt im Verhältnis zum axialen Mittelpunkt (31) des jeweiligen Pleuelhauptlagers (21) versetzt ist.

4. Baureihe nach Anspruch 2 oder 3, dadurch gekennzeichnet, daß der Pleuelversatz (L4) von sowohl jener einen als auch jener anderen Motorart identisch sind.

5. Baureihe nach Anspruch 4, dadurch gekennzeichnet, daß die Zylinderbohrungen von sowohl jener einen als auch jener anderen Motorart identisch sind.

6. Baureihe nach Anspruch 4 oder 5, dadurch gekennzeichnet, daß die Pleuel (17a) von sowohl jener einen als auch jener anderen Motorart identisch sind.

7. Baureihe nach einem der vorhergehenden Ansprüche, dadurch gekennzeichnet, daß es sich bei jener einen Motorart um einen V8 und jener anderen Motorart um einen V6 handelt.

8. Baureihe nach einem der Ansprüche 4 bis 7, wobei ein Motor jener anderen Art dadurch gekennzeichnet ist, daß die Größe des Pleuelversatzes (L4) ein Viertel des axialen Abstands (L3) zwischen benachbarten Seitenflächen (24) der Pleuelhauptlager (21) auf jedem der Kurbelzapfen (22a) beträgt.

## Revendications

1. Série de moteurs à piston, chaque moteur dans la série ayant un bloc moteur (11) comprenant deux groupes (12, 13) de deux ou plus de deux cylindres disposés en une formation en V, un vilebrequin (14) supporté dans le bloc moteur et ayant deux ou plus de deux manetons (22, 22a), des pistons (16), chacun étant guidé pour un mouvement réciproque dans un alésage de cylindre respectif, et des bielles (17a), chacune ayant un palier de pied (18) à une extrémité relié à un piston respectif et un palier de tête (21) à l'autre extrémité, chaque moteur de la série ayant le palier de tête de la bielle de chaque cylindre dans un groupe (12) et le palier de tête de la bielle du cylindre opposé dans l'autre groupe (13) supportés côte à côte sur un seul maneton respectif, la série comprenant un type de moteur qui a chacun des manetons respectifs (22) formés avec un diamètre et un axe (23) uniformes et qui n'a aucune séparation substantielle entre les faces latérales adjacentes (24) des paliers de tête respectifs (21) et comprenant un autre type de moteur ayant un nombre de cylindres différent du premier type de moteur et qui a chacun des manetons respectifs (22a) formés avec des axes décalés (23a, 23b) et qui a une séparation axiale des faces latérales adjacentes des paliers de tête respectifs, les axes (29) des cylindres d'un groupe (12) à la fois dans ledit premier et dans ledit autre types de moteur étant décalés, par rapport à l'axe du vilebrequin, à l'égard des axes des cylindres de l'autre groupe (13) d'une quantité appelée le décalage des groupes (L5) qui est commune auxdits deux types de moteur, ledit autre type de moteur ayant l'axe (29) de chaque cylindre décalé, par rapport à l'axe du vilebrequin, à l'égard du centre axial (31) du palier de tête respectif (21) d'une quantité appelée le décalage des bielles (L4) et étant disposé de telle façon que le décalage des groupes (L5) soit plus petit que la distance (L7) entre les centres axiaux des paliers de tête sur chacun des manetons respectifs (22a).

2. Série suivant la revendication 1, caractérisée en ce que ledit premier type de moteur a l'axe (29) de chaque cylindre, par rapport à l'axe du vilebrequin, décalé du centre axial (31) du palier de tête respectif (21) d'une quantité aussi appelée le décalage des bielles (L4) et est disposé de telle façon que le décalage des groupes (L5) soit plus grand que la distance (L6) entre les centres axiaux des paliers de tête sur chacun des manetons respectifs (22).

3. Série suivant la revendication 2, caractérisée en ce que le palier de pied (18) de chaque bielle (17a) est disposé de façon centrale autour de l'axe (29) du cylindre respectif de telle façon que son centre axial soit décalé par rapport au centre axial (31) du palier de tête respectif (21).

4. Série suivant la revendication 2 ou la revendication 3, caractérisée en ce que les décalages des bielles (L4) tant dudit premier que dudit autre types de moteur sont identiques.

5. Série suivant la revendication 4, caractérisée en ce que les alésages des cylindres tant dudit premier que dudit autre types de moteur sont identiques.

6. Série suivant la revendication 4 ou la revendication 5, caractérisée en ce que les bielles (17a) tant dudit premier que dudit autre types de moteur sont identiques.

7. Série suivant l'une quelconque des revendications précédentes, caractérisée en ce que ledit premier type de moteur est un V8 et ledit autre type de moteur est un V6.

8. Série suivant l'une quelconque des revendications 4 à 7, dans laquelle un moteur dudit autre type est caractérisé en ce que la grandeur du décalage des bielles (L4) est égale à un quart de la distance axiale (L3) séparant les faces latérales adjacentes (24) des paliers de tête (21) sur chacun des manetons (22a).
